Europäisches Patentamt

(19) European Patent Office

Office européen des brevets

(11) **EP 0 939 923 B1**

(12) **EUROPEAN PATENT SPECIFICATION**

(45) Date of publication and mention
of the grant of the patent:
**14.11.2001 Bulletin 2001/46**

(51) Int Cl.[7]: **G05D 16/20**, G05D 7/06,
F04D 27/02

(21) Application number: **97927684.7**

(22) Date of filing: **22.05.1997**

(86) International application number:
**PCT/US97/08597**

(87) International publication number:
**WO 97/44719 (27.11.1997 Gazette 1997/51)**

(54) **METHOD FOR DETECTING THE OCCURRENCE OF SURGE IN A CENTRIFUGAL COMPRESSOR**

ERKENNUNGSVERFAHREN FÜR DRUCKSTOSS IN TURBOVERDICHTER

PROCEDE DE PREDICTION DE L'APPARITION D'UNE SURPRESSION DANS UN
COMPRESSEUR CENTRIFUGE

(84) Designated Contracting States:
**DE FR GB IT SE**

(30) Priority: **22.05.1996 US 17193 P**

(43) Date of publication of application:
**08.09.1999 Bulletin 1999/36**

(73) Proprietor: **INGERSOLL-RAND COMPANY
Woodcliff Lake, NJ 07675 (US)**

(72) Inventor: **KANN, Meng, Jeng
Mayfield, KY 42066 (US)**

(74) Representative: **Feakins, Graham Allan et al
RAWORTH, MOSS & COOK
RAWORTH HOUSE
36 Sydenham Road
Croydon, Surrey CRO 2EF (GB)**

(56) References cited:
EP-A- 0 565 373          US-A- 4 581 900
US-A- 4 686 834          US-A- 4 936 741

## Description

This invention generally relates to centrifugal compressors and more particularly to a method for electronically detecting the occurrence of surge in a centrifugal compressor driven by an electric motor, based on the measured rates of change of the discharge pressure and motor current.

Surge is an unwanted phenomenon in centrifugal compressors which occurs when the fluid flow rate through the compressor is suddenly reduced. When the flow rate is reduced to a point below a predetermined required minimum flow rate, fluid collects at the compressor discharge port and as the fluid collects, the fluid pressure at the discharge port increases until surge occurs. During the occurrence of surge, the direction of fluid flow is reversed and the built up fluid is flowed back into the compressor.

Surge is undesirable for a number of reasons. Compressor surge produces unstable fluid flow within the compressor and loud noise, and also increases the amount of heat generated by the compressor. Frequently, one of the consequences of surge is damage to compressor component parts.

One conventional way of avoiding surge is by increasing the fluid flow rate through the compressor inlet. Although surge is avoided by increasing the flow rate through the compressor inlet, such increased capacity for this compressor operation negatively affects the cost of compressor operation.

As an alternative to sacrificing compressor efficiency by increasing inlet flow rate, mechanical means for avoiding the occurrence of surge have been developed. One such conventional mechanical means for avoiding the occurrence of surge is a mechanical differential pressure switch located in a switch tube or housing. Such known pressure differential switches include a pair of spaced apart contacts located in the housing. When the pressure differential between the ends of the switch housing is at a pressure level indicative of the occurrence of surge, the pressure differential causes the contacts to close and thereby provide an indication to a compressor operator that a surge condition is present. When the compressor surges, a valve is opened to adjust the fluid flow through the compressor and thereby take the compressor out of surge.

It is difficult for compressor operators to precisely set the gap between the contacts in known pressure differential switches. Additionally, the sensitivity of the contacts decreases over time. Moreover, such differential switches and other mechanically actuated surge detection means, usually do not prevent the compressor from going into deep surge once surge is detected.

US-A-4 581900 discloses a method and apparatus for measuring various pressures across a compressor as well as the current drawn by the compressor drive motor. US-A-4 936 741 discloses a means of initiating a blow-off step when necessary to prevent surges in a compressor. US-A-4 686 834 discloses a device for avoiding surge by monitoring fluctuations of motor current and speed.

It is important to provide a reliable method for taking a compressor out of the surge condition to prevent compressor damage.

According to the present invention, there is provided a method of detecting the occurrence of surge in a centrifugal compressor having an inlet valve and at least one means for effecting the flow of fluid to the inlet valve, having the steps of calculating the rate of change of a first compressor operating parameter and calculating the rate of change of a second compressor operating parameter as compared with acceptable set point rates of change for said first and said second operating parameters respectively, characterised by the further steps of:

a) calculating a rate of change of mass flow rate through the compressor by adding the calculating rates of change of the first and second compressor operating parameters; and

b) if the calculated mass flow rate of change is greater than or equal to an acceptable mass flow rate of change, then effecting a change in the flow of fluid through the inlet valve.

For a better understanding of the invention and to show how the same may be carried into effect, reference will now be made, by way of example to the accompanying drawings, in which:-

Figure 1 is a schematic representation of a compressor system that includes a controller for detecting a surge condition in a compressor;

Figure 2 is a flowchart of controller software logic for determining if a surge condition is present by calculating the rate of change of the compressor discharge pressure when the rate of change of the discharge pressure is combined with the rate of change of discharge temperature of the compressed fluid;

Figure 3 is a flowchart of the controller software logic for determining if a surge condition is present by calculating the rate of change of the discharge temperature of the compressed fluid;

Figure 4 is a flowchart of the controller software logic for determining if a surge condition is present by calculating the rates of change of the discharge pressure and current drawn by the prime mover;

Figure 5 is comprised of representative chart showing analog signals of motor current, discharge temperature and discharge pressure versus time; and

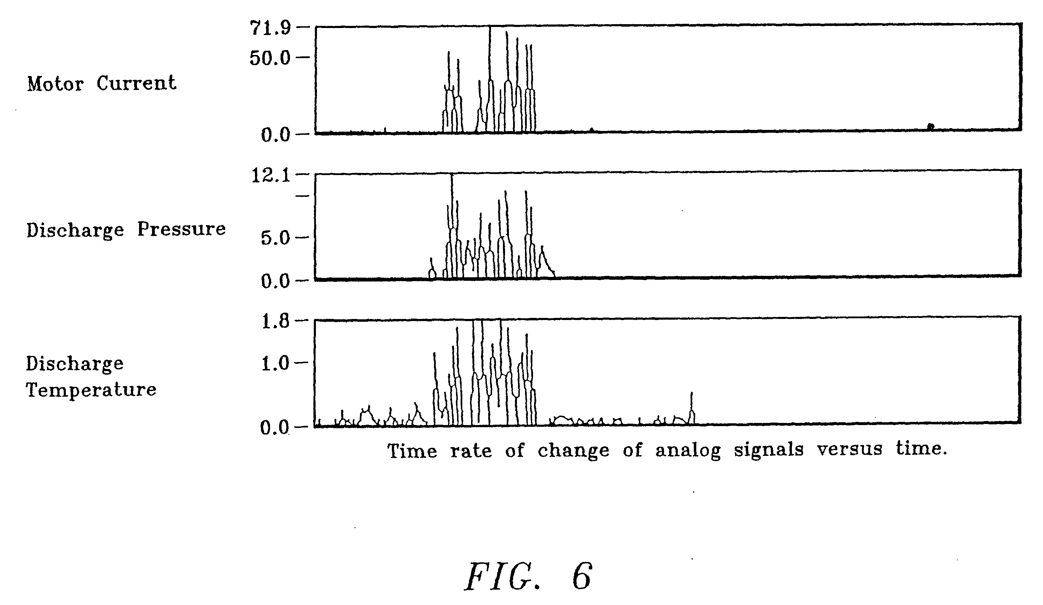

Figure 6 is comprised of representative charts showing the time rate of change of the analog signals of Figure 6 versus time.

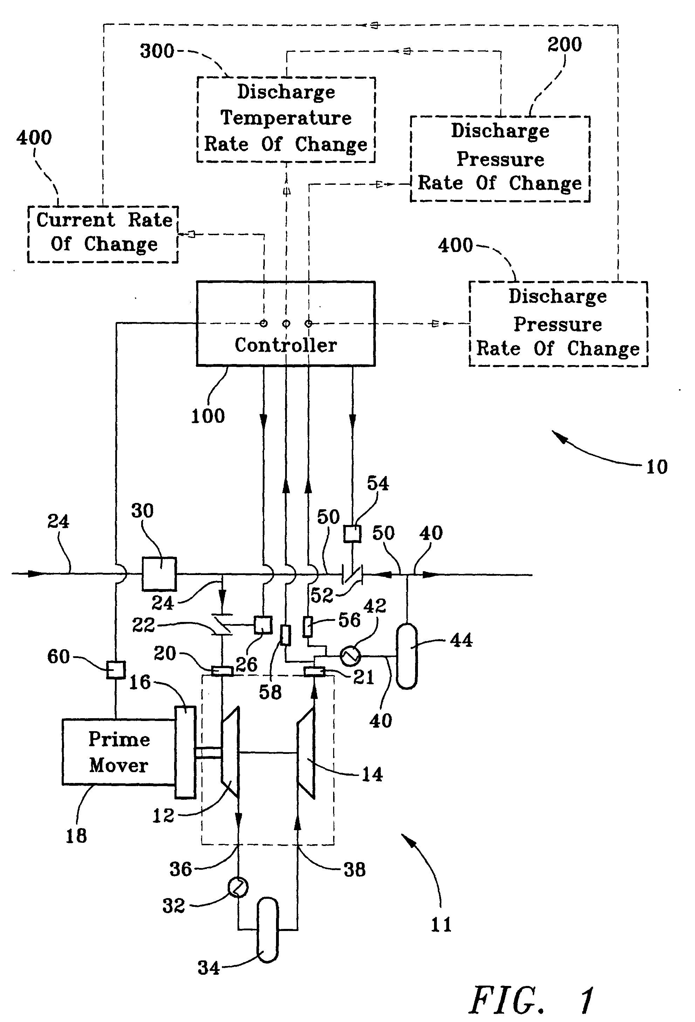

Referring now to the drawings, wherein similar reference characters designate corresponding parts throughout the several views, Figure 1 is a schematic representation of a compressed air system 10 that includes compressor 11.

The compressor is a two-stage centrifugal compressor having first compression stage 12 and second compression stage 14. The compressor compression stages include a rotatable impeller (not shown) which compresses the fluid as it rotates. The compression stages are of conventional design well known to one skilled in the art. Compression stages 12 and 14 are driven by a gear system 16 that in turn is driven by a prime mover 18. The gear system is often referred to as a "bull gear". For purposes of this disclosure, "prime mover" shall mean any device that can be used to drive compressor 11 including, but not limited to electric motors, internal combustion engines. Specifically, for purposes of the preferred embodiment, the prime mover shall be an electrically powered three-phase induction motor.

The compression system 10 is intended to control centrifugal compressors ranging from 70.7 to 7070 Btu/sec (100 to 10,000 horsepower) and producing 9.9 to 2830 cubic meters (350 to 100,000 cubic feet) per minute at pressures from .35 to 35.15 kg/sq cm (5 to 500 pounds per square inch) gauge.

The compressor 11 further includes an inlet 20 and discharge port 21. The volume of air entering the compressor through the inlet 20 is altered by an inlet valve 22 that is located along the length of inlet conduit 24. Each change in position of the inlet is effected by a valve control 26 which in turn is actuated by microprocessor-based electronic controller 100. The controller will be described in greater detail hereinafter. The valve control is in signal receiving relation with controller 100 and is in signal transmitting relation with inlet valve 22.

Inlet filter 30 is also located along inlet conduit 24 and serves to filter particulate and other unwanted matter from the stream of uncompressed inlet air.

An intercooler 32 and moisture separator 34 are flow connected to the discharge port 36 of the first compression stage 12 and the inlet 38 of the second compression stage 14. The intercooler and moisture separator serve to cool the compressed fluid and remove moisture such as water from the compressed fluid before it is further compressed in the second compression stage 14.

Aftercooler 42 and dryer 44 are flow connected along discharge conduit 40 as shown in schematic Figure 1. The aftercooler and dryer are located in compressed fluid receiving relation with the second compression stage and like intercooler 32 and dryer 34, serve to cool the hot compressed fluid and remove moisture from the compressed fluid before it is flowed to an object of interest such as a pneumatically actuated tool for example. The intercooler, aftercooler and dryers are of conventional design and are well known to one skilled in the relevant art.

Return conduit 50 flow connects the inlet and discharge conduits 24 and 40 and includes a bypass valve 52 flow connected to the return conduit. The bypass valve is repositioned dunng operation of the compressor 11 to alter the volume of compressed air discharged from the second compression stage that is to flowed to the compressor inlet 20 and mixed with the uncompressed ambient inlet air. Bypass valve controller 54 is located in signal receiving relation with the controller 100 and is in signal transmitting relation with bypass valve 52.

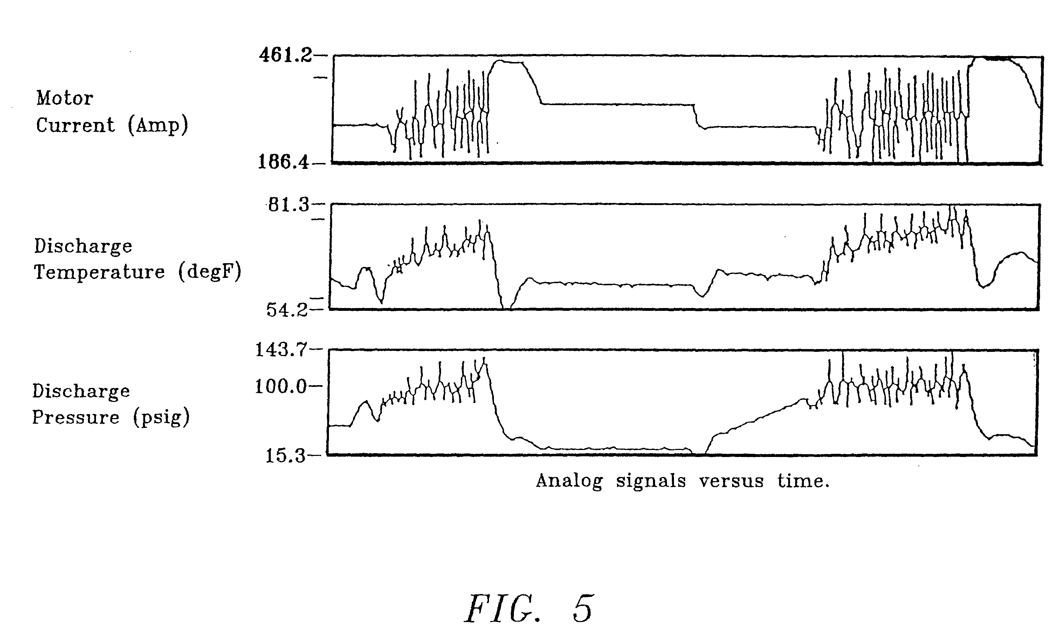

First sensor 56 and second sensor 58 respectively measure discharge pressure and discharge temperature of the compressed air that is flowed out discharge port 21 through discharge conduit 40. The first and second sensors are in signal transmitting relation with controller 100 and the sensors provide electrical analog type signals which are processed by the controller according to the present invention, to determine if the compressor is experiencing a surge condition. Examples of the analog signals generated by the sensors are shown in Figure 5.

A third sensor 60 senses the current drawn by the electric motor 18. The signal representing the motor current is transmitted to the controller which processes the signal. The signal is also an analog type signal and is plotted as amps drawn versus time in Figure 5.

The next portion of the description of the preferred embodiment will relate to the microprocessor based controller 100 and the controller logic for determining the occurrence of a surge condition.

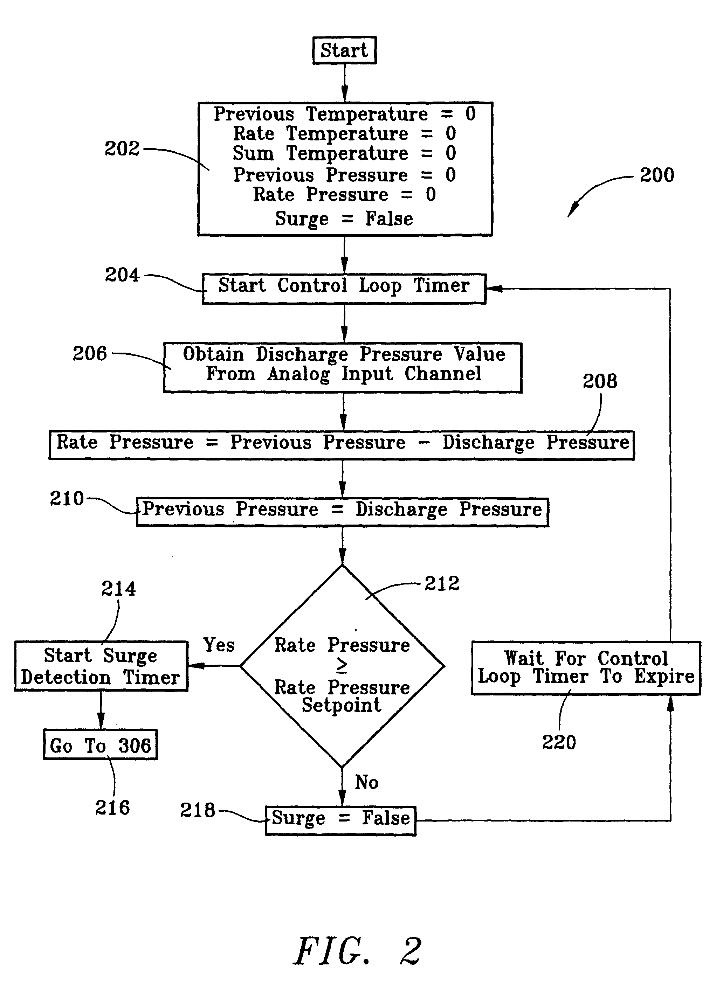

The controller software logic is stored in the microcontroller memory and is comprised of rate of change computational and comparative logic for rate of change of discharge temperature, discharge pressure, and motor current. The controller software logic is shown generally in the flowchart Figures 2 - 4.

Figure 2 is a flowchart of the controller software logic 200, for determining if a surge condition is present by calculating the rate of change of the compressor discharge pressure when the rate of change of the discharge pressure is combined with the rate of change of discharge temperature of the compressed fluid.

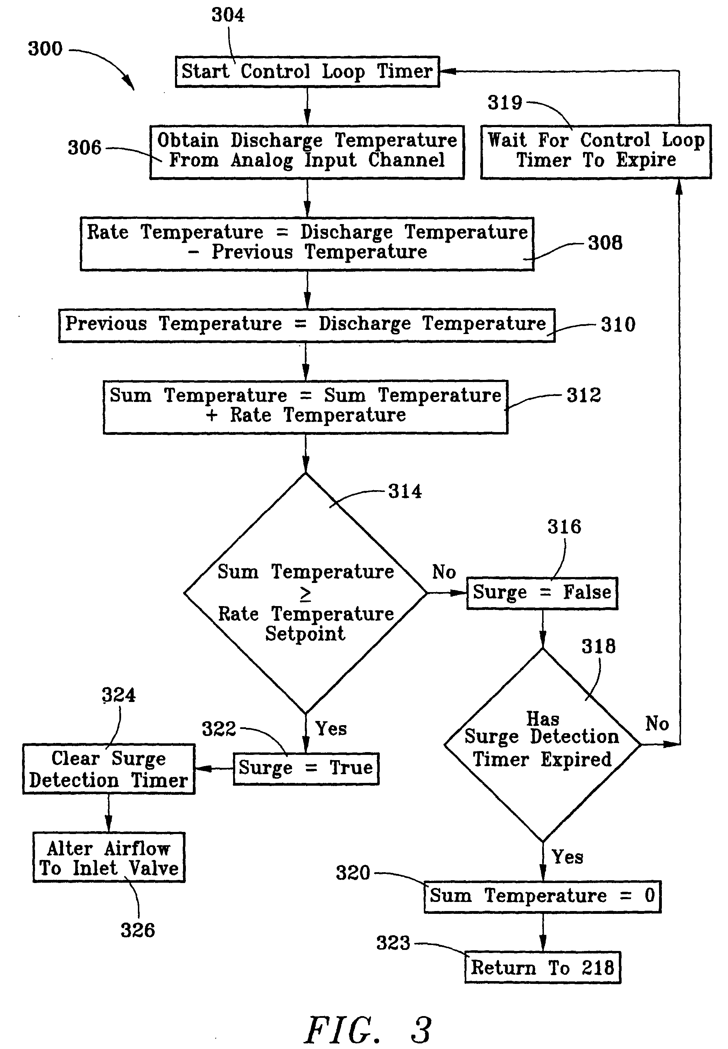

Figure 3 is a flowchart of the controller software logic 300, for determining if a surge condition is present by calculating the rate of change of the discharge temperature of the compressed fluid.

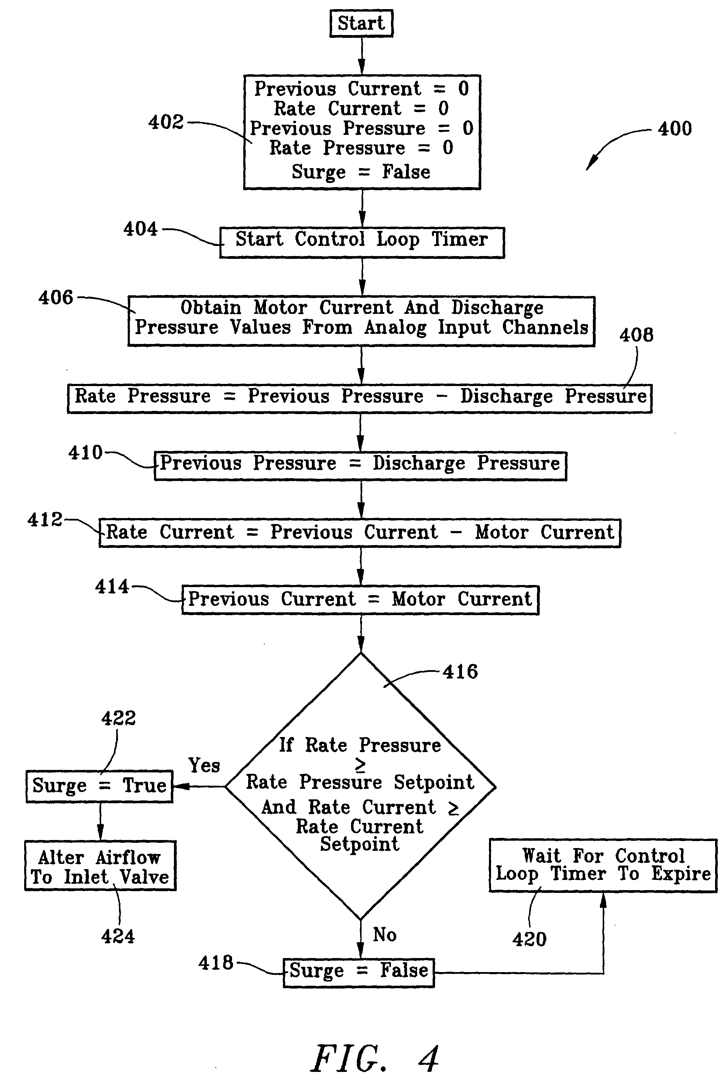

Figure 4 is a flowchart of the controller software logic 400, for determining if a surge condition is present by calculating the rates of change of the discharge pressure and current drawn by the prime mover.

Surge Detection by Calculating the Time Rates of Change of Discharge Pressure and Motor Current

This portion of the description shall refer to Figures 1 and 4. For the compressor 11 driven by electric motor 18, surge is detected by calculating the magnitude of the time rate of change of both motor current and discharge pressure and comparing the calculated values with reference set points. When both rates of greater than or equal to their respective set points, the compressor is in surge. The method shown in Figure 4 is utilized to detect surge when the prime mover is an electric motor.

Software logic referred to generally at 400 in Figure 4 is executed at fixed intervals of 120 msec by the controller 100. Logic 400 is executed as part of a compressor controlling sequence executed by the controller. The other steps in the compressor controlling sequence do not form part of the present invention.

Turning now to Figure 4, in step 402 the variables PREV CURRENT, RATE CURRENT, PREV PRESS, and RATE PRESS are initialized to equal zero, and the variable SURGE is initialized to False. The variables PREV PRESS and PREV CURRENT, represent the previous values of discharge pressure and motor current drawn. The variables RATE PRESS and RATE CURRENT represent the rates of change of the discharge pressure and motor current respectively. SURGE is indicative of the existence of a surge condition and is set equal to False initially to indicate that a surge condition is not present.

In step 404 the control loop timer is started. The control loop timer measures the time to fully execute the compressor controlling sequence generally described hereinabove.

Then in step 406 the motor current value sensed by sensor 60 and the discharge pressure value sensed by sensor 56 are obtained from the controller analog input channels.

Logic steps 408 - 414 represent computational steps. In step 408, RATE PRESS is calculated by subtracting the sensed discharge pressure from PREV PRESS. In step 410, PREV PRESS is set equal to the present sensed discharge pressure sensed by sensor 56. In step 412, the RATE CURRENT is calculated by subtracting the sensed value of drawn current from PREV CURRENT. In step 414, PREV CURRENT is set equal to the value of current measured by sensor 60.

In decision step 416, if the value of RATE CURRENT is greater than or equal to the reference set point rate of change for current, and the value of RATE PRESS is greater than the reference set point rate of change of discharge pressure, the compressor is in surge and the value of SURGE is set equal to True and the flow of air supplied to the inlet valve is effected in respective steps 422 and 424. In this way if there is a drop in discharge pressure and current drawn, the compressor is in surge.

In step 424, the flow of air to the inlet valve is altered by transmitting signals to the bypass valve controller 54 and the inlet valve controller 26 thereby fully opening the bypass valve and repositioning the inlet valve to an unloaded position. In this way, surge condition is terminated.

It is contemplated that the compressed air system bypass valve connector 50 may be directed to atmosphere rather than being flow connected to inlet valve 22. In this instance, when the bypass valve is opened, the compressed fluid is discharged to atmosphere.

In decision step 416, if it is determined that either the rate of change of the current drawn by the prime mover or the rate of change of the discharge pressure is not greater than or equal to the reference set point, then SURGE is set equal to False in step 418 and in step 420 the logic routine pauses until the control loop timer expires at the completion of the compressor controlling sequence.

The reference set points for discharge pressure and motor current should be set to large enough values so that the rate of change caused by noise induced in the electronic signals can be distinguished from the rates of change caused by a real surge.

Surge Detection by Calculating the Time Rates of Change of Discharge Pressure and Discharge Temperature

The method for detecting surge by analyzing the time rate of change of the discharge pressure and discharge temperature will now be described. The method is represented by the software logic flowcharts shown in Figures 2 and 3. It is preferred that the method described hereinbelow be used to detect surge in a compressed air system where the compressor prime mover is not an electric motor.

When the time rate of change of the compressor discharge pressure and discharge temperature are combined to determine the presence of a surge condition, first, the rate of change of the discharge pressure is calculated, and if the rate of change for the discharge pressure is greater than or equal to a predetermined reference set point rate of change, the controller 100 executes the software logic 300 for calculating the time rate of change of the discharge temperature.

Routine 200 is executed every 120 msec by controller 100 during execution of the compressor controlling sequence described generally hereinabove. Turning to the flowchart representation of Figure 2, for calculating the rate of change of compressor discharge pressure, initially in step 202, variables "PREV PRESS", "RATE PRESS", and "SURGE" are respectively set equal to 0, 0, and False. The variables PREV PRESS, RATE PRESS, and SURGE are the same as previously described hereinabove in routine 400.

In step 204 a control loop timer is started. In step 206, the discharge pressure sensed by first pressure sensor 56 is obtained by controller 100 and is subtracted from the value of PREV PRESS to obtain the new rate of change of the discharge pressure. RATE PRESS is equal to the difference between PREV PRESS and the sensed discharge pressure. See step 208. Then PREV PRESS is set equal to the sensed discharge pressure value in step 210.

In decision block 212, if the rate of change of the discharge pressure is greater than or equal to a reference set point discharge pressure rate of change, the software 200 then starts a surge detection timer in step 214 and then executes software routine 300, in step 216. The routine proceeds to step 306 of routine 300.

If the rate of change of the discharge pressure is less than the reference set point rate of change, SURGE is set equal to False in step 218, and the logic routine waits for the control loop timer to expire before returning to step 204 and executing routine 200.

If the acceptable discharge pressure rate of change is equaled or exceeded in step 212, the software logic routine 200 executes software logic routine 300 and calculates the rate of change of the temperature of the discharged compressed fluid.

In step 202 of routine 200, the variables "PREV TEMP", "RATE TEMP", "SUM TEMP", were initialized to 0. PREV TEMP represents the previous sensed discharge temperature value, RATE TEMP represents the rate of change of the discharge temperature, and SUM TEMP represents the sum of the rates of change for the currently executed loop of logic routine 300.

In step 306, the temperature of the discharged compressed fluid sensed by temperature sensor 58 is obtained from a controller analog input channel and then respectively in steps 308, 310, and 312, RATE TEMP is set equal to the difference between PREV TEMP and the sensed discharge temperature; PREV TEMP is set equal to the sensed discharge temperature; and SUM TEMP is set equal to the sum of SUM TEMP and RATE TEMP.

Due to the relatively slow response time of known temperature sensors, the rate of change of temperature is analyzed for a period of time that is longer than the period of time the discharge pressure is analyzed. A fixed number of control loops may be chosen, for example four and the rates of change within the number of control loops are accumulated as the total rate of change for the discharge temperature. Thus a larger temperature rise may be obtained so that false surge indications due to noise are eliminated.

In step 314, if the value of SUM TEMP is less than a reference set point discharge temperature rate of change, the compressor is not in surge and SURGE is set equal to False in step 316, and if it is determined the surge detection timer has not expired in decision step 318, the logic routine waits for the control loop timer to expire in step 319 and then returns to step 304 and again executes logic routine 300 and obtains another discharge temperature rate of change in the manner described.

In step 318, if the surge detection timer has expired, SUM TEMP is set equal to zero and the routine is returned to step 218 in routine 200. See steps 320 and 323 respectively.

If in step 314, the SUM TEMP is greater than or equal to the set point discharge temperature rate of change, then SURGE is set equal to TRUE, in step 322. Then in step 324, the surge detection timer is cleared and the controller alters the airflow to the inlet in step 326. The controller sends signals to the inlet valve 22 and bypass valve 54 to change the positions of the valves and alter the inlet air supply and avoid the surge condition. The signal transmitted to the bypass valve control 54 fully opens the bypass valve 52, and the signal; transmitted to inlet valve control 26 opens the inlet valve to a compressor unloaded position.

As previously described hereinabove, the bypass may be exhausted directly to atmosphere rather than to the inlet valve.

By the foregoing method, if drop in discharge pressure is accompanied by a rise in the discharge temperature a surge condition is present. By combing two variables to determine the occurrence of surge, false surge indications are prevented.

It is also contemplated that rather than determining the rate of change of the temperature of the discharged compressed fluid, the rate of change of the stage temperature of the fluid flowing between stages 12 and 14 or the rate of change of the fluid at the impeller diffuser may be combined with the rate of change of discharge pressure to determine if a surge condition is present.

SUMMARY

It is the purpose of this invention to detect surge by addressing surge more directly with the surge phenomenon of flow reversal whereby the flow drops to zero and reverses. This is accomplished by using the time derivative of the mass flow rate through the compressor. Although some compressors are equipped with flow measuring devices, most are not since such devices are quite expensive. Thus, as a less expensive alternative it is proposed using the ideal head equation and the fluid mass flow rate to relate to overall compressor horsepower. This neglects the mechanical losses within the compressor system such as bearing and gear power losses. The equation is represented as follows:

$$HP = \dot{m}RT_1\left(\frac{k}{k-1}\right)\left[\left(\frac{P_2}{P_1}\right)^{\frac{k-1}{k}}-1\right]$$

The total shaft power of an induction motor is:

$$HP = \S i^2 r$$

Combining these two equations, solving for the mass flow rate, and differentiating with respect to time leads to the following generalized expression for the time rate of change of the mass flow rate. It is this expression which is then compared against pre established limits to characterize the presence or lack of surge.

$$\frac{d\dot{m}}{dt} = A\frac{dt}{dt} + B\frac{dP_1}{dt} + C\frac{dP_2}{dt} + D\frac{dT_1}{dt}$$

The expressions A, B, C, and D are simple functions of the system parameters; gas inlet temperature, T1, inlet pressure, P1, discharge pressure, P2, and motor current, i.

The present invention which calculates the rate of change of discharge pressure, discharge temperature and motor current, indirectly measures the mass flow rate of the compressor and therefore is an accurate means for determining the presence or lack of surge.

Thus by measuring the change in current, discharge pressure and discharge temperature, a surge condition may effectively be determined.

## Claims

1. A method of detecting the occurrence of surge in a centrifugal compressor (11) having an inlet valve (22) and at least one means for effecting the flow of fluid to the inlet valve (22), having the steps of calculating the rate of change of a first compressor operating parameter (208, 408) and calculating the rate of change of a second compressor operating parameter (312, 412) as compared with acceptable set point rates of change for said first and said second operating parameters respectively, **characterised by** the further steps of:

   a) calculating a rate of change of mass flow rate through the compressor (11) by adding the calculating rates of change of the first and second compressor operating parameters; and
   b) if the calculated mass flow rate of change is greater than or equal to an acceptable mass flow rate of change, then effecting a change in the flow of fluid through the inlet valve.

2. A method as claimed in claim 1, wherein the first compressor operating parameter is discharge pressure (408) and the second compressor operating parameter (412) is the current drawn by a compressor prime mover.

3. A method as claimed in claim 1 wherein the first compressor operating parameter is discharge pressure (208) and the second compressor operating parameter is discharge temperature (308).

4. A method as claimed in claim 1, 2 or 3, wherein the compressor includes an inlet valve controller (26), a bypass valve (52), and a bypass valve controller (54), the method further comprising the step of transmitting signals to the bypass controller (54) and inlet valve controller (26) to open the bypass valve (52) and to reposition the inlet valve (22) to a compressor unloaded position.

5. A method as claimed in any one of the preceding claims, wherein the compressor (11) is driven by an electric motor (18), the method further comprising calculating the rate of change of electric current drawn by the motor (18) as compared with acceptable set point rates of change for compressor discharge pressure and current drawn by the motor, respectively, and obtaining the mass flow rate of change by adding the rate of change of the current drawn by the motor and the rate of change of the compressor discharge pressure.

## Patentansprüche

1. Verfahren zum Erkennen des Auftretens eines Druckstosses in einem Turboverdichter (11), der ein Einlaßventil (22) und wenigstens eine Einrichtung hat, die das Strömen eines Fluids zu dem Einlaßventil (22) hin bewirkt, mit den Schritten des Berechnens der Änderungsrate eines ersten Betriebsparameters (208, 408) des Verdichters und des Berechnens der Änderungsrate eines zweiten Betriebsparameters (312, 412) des Verdichters im Vergleich zu akzeptablen Einstellpunkt-Änderungsraten für die ersten und die zweiten Betriebsparameter, **gekennzeichnet durch** die weiteren Schritte:

   (a) Berechnen einer Änderungsrate einer Massenströmungsrate **durch** den Verdichter (11) **durch** Addieren der Berechnungs-Änderungsraten der ersten und zweiten Betriebsparameter des Verdichters; und
   (b) wenn die berechnete Massenströmungs-Änderungsrate größer ist als eine oder gleich einer akzeptablen Massenströmungs-Änderungsrate, Bewirken einer Änderung in der Strömung des Fluids **durch** das Einlaßventil.

2. Verfahren nach Anspruch 1, bei dem der erste Betriebsparameter des Verdichters der Auslaßdruck (408) ist und der zweite Betriebsparameter (412) des Verdichters der Strom ist, der durch eine Antriebsmaschine des Verdichters verbraucht wird.

**3.** Verfahren nach Anspruch 1, bei dem der erste Betriebsparameter des Verdichters der Auslaßdruck (208) ist und der zweite Betriebsparameter des Verdichters die Auslaßtemperatur (308) ist.

**4.** Verfahren nach Anspruch 1, 2 oder 3, bei dem der Verdichter einen Einlaßventil-Regler (26), ein Bypass-Ventil (52) und einen Bypass-Ventil-Regler (54) aufweist, wobei der Verfahrensschritt e) den Schritt aufweist, Signale an den Bypass-Regler (54) und den Einlaßventil-Regler (26) zu übertragen, um das Bypass-Ventil (52) zu öffnen und das Einlaßventil (22) in eine unbelastete Stellung des Verdichters zurückzustellen.

**5.** Verfahren nach einem der vorhergehenden Ansprüche, bei dem der Verdichter (11) durch einen elektrischen Motor (18) angetrieben wird, wobei das Verfahren ferner aufweist das Berechnen der Änderungsrate des elektrischen Stroms, der durch den Motor (18) verbraucht wird, im Vergleich zu akzeptablen Einstellpunkt-Änderungsraten für den Auslaßdruck des Verdichters und den durch den Motor verbrauchten Strom, sowie das Erhalten der Massenströmungs-Änderungsrate durch Addieren der Änderungsrate des durch den Motor verbrauchten Stroms und der Änderungsrate des Auslaßdrucks des Verdichters.

## Revendications

**1.** Procédé de détection de l'apparition d'à-coups dans un compresseur centrifuge (11) ayant une soupape d'entrée (22) et au moins un dispositif destiné à assurer la circulation d'un fluide vers la soupape d'entrée (22), comprenant des étapes de calcul de la vitesse de variation d'un premier paramètre de fonctionnement du compresseur (208, 408) et de calcul de la vitesse de variation d'un second paramètre de fonctionnement du compresseur (312, 412), par comparaison avec des points de consigne pour des vitesses acceptables de variation du premier et du second paramètre de fonctionnement respectivement, **caractérisé par** les étapes supplémentaires suivantes :

    a) le calcul d'une vitesse de variation du débit massique dans le compresseur (11) par addition des vitesses de variation calculées du premier et du second paramètre de fonctionnement du compresseur, et
    b) si la vitesse calculée de variation du débit massique est supérieure ou égale à une vitesse acceptable de variation de débit massique, l'exécution d'un changement de la circulation du fluide par la soupape d'entrée.

**2.** Procédé selon la revendication 1, dans lequel le premier paramètre de fonctionnement du compresseur est la pression d'évacuation (408) et le second paramètre de fonctionnement du compresseur (412) est l'intensité du courant consommé par l'élément moteur principal du compresseur.

**3.** Procédé selon la revendication 1, dans lequel le premier paramètre de fonctionnement du compresseur est la pression d'évacuation (208) et le second paramètre de fonctionnement du compresseur est la température d'évacuation (308).

**4.** Procédé selon la revendication 1, 2 ou 3, dans lequel le compresseur comporte un organe de commande (26) de la soupape d'entrée, une soupape de dérivation (52), et un organe de commande (54) de la soupape de dérivation, l'étape e) du procédé comprenant une étape de transmission de signaux vers l'organe de commande (54) de la soupape de dérivation et l'organe de commande (26) de la soupape d'entrée afin que la soupape de dérivation (52) soit ouverte et que la soupape d'entrée (22) soit déplacée à une position de compresseur sans charge.

**5.** Procédé selon l'une quelconque des revendications précédentes, dans lequel le compresseur (11) est entraîné par un moteur électrique (18), et le procédé comporte en outre le calcul de la vitesse de variation de l'intensité du courant électrique consommé par le moteur (18) par rapport à des vitesses acceptables de variation formant des points de consigne pour la pression d'évacuation du compresseur et l'intensité du courant consommé par le moteur respectivement, et l'obtention de la vitesse de variation du débit massique par addition de la vitesse de variation de l'intensité du courant consommé par le moteur et de la vitesse de variation de la pression d'évacuation du compresseur.

*FIG. 1*

*FIG. 2*

**Start Control Loop Timer** — 304

300

**Obtain Discharge Temperature From Analog Input Channel** — 306

**Wait For Control Loop Timer To Expire** — 319

**Rate Temperature = Discharge Temperature − Previous Temperature** — 308

**Previous Temperature = Discharge Temperature** — 310

**Sum Temperature = Sum Temperature + Rate Temperature** — 312

**Sum Temperature ≥ Rate Temperature Setpoint** — 314

No → **Surge = False** — 316

Yes

**Surge = True** — 322

**Clear Surge Detection Timer** — 324

**Has Surge Detection Timer Expired** — 318

No

Yes

**Sum Temperature = 0** — 320

**Alter Airflow To Inlet Valve** — 326

**Return To 218** — 323

*FIG. 3*

Start

Previous Current = 0
Rate Current = 0
Previous Pressure = 0
Rate Pressure = 0
Surge = False

402

400

404 — Start Control Loop Timer

406 — Obtain Motor Current And Discharge Pressure Values From Analog Input Channels

408

Rate Pressure = Previous Pressure − Discharge Pressure

410 — Previous Pressure = Discharge Pressure

412 — Rate Current = Previous Current − Motor Current

414 — Previous Current = Motor Current

416

If Rate Pressure ≥ Rate Pressure Setpoint And Rate Current ≥ Rate Current Setpoint

422

Yes

Surge = True

Alter Airflow To Inlet Valve

424

No

Wait For Control Loop Timer To Expire

420

418 — Surge = False

FIG. 4

Analog signals versus time.

*FIG. 5*

EP 0 939 923 B1

Motor Current

Discharge Pressure

Discharge
Temperature

Time rate of change of analog signals versus time.

*FIG. 6*

EP 0 939 923 B1